(19) **Europäisches Patentamt / European Patent Office / Office européen des brevets**

(11) **EP 3 264 018 B1**

(12) **FASCICULE DE BREVET EUROPEEN**

(45) Date de publication et mention de la délivrance du brevet:
**01.09.2021 Bulletin 2021/35**

(51) Int Cl.:
**F28D 20/02** (2006.01)   **G01F 23/296** (2006.01)
**G01F 23/284** (2006.01)

(21) Numéro de dépôt: **17177969.7**

(22) Date de dépôt: **26.06.2017**

(54) **SYSTÈME DE STOCKAGE THERMIQUE PAR MCP ET COMPRENANT UN DISPOSITIF DE MESURE D'UN PARAMÈTRE REPRÉSENTATIF DU TAUX DE CHARGE**

THERMISCHES PCM-SPEICHERSYSTEM, DAS EINE MESSVORRICHTUNG EINES REPRÄSENTATIVEN PARAMETERS DES LADUNGSNIVEAUS UMFASST

SYSTEM FOR THERMAL STORAGE BY PCM, COMPRISING A DEVICE FOR MEASURING A PARAMETER REPRESENTING THE CHARGE RATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2016 FR 1655982**

(43) Date de publication de la demande:
**03.01.2018 Bulletin 2018/01**

(73) Titulaire: **Commissariat à l'Energie Atomique et aux Energies Alternatives**
**75015 Paris (FR)**

(72) Inventeurs:
• **REVIL-BAUDARD, Léo**
 **38950 SAINT-MARTIN- LE -VINOUX (FR)**
• **BENTIVOGLIO, Fabrice**
 **38210 CRAS (FR)**
• **POUVREAU, Jérôme**
 **38000 GRENOBLE (FR)**

(74) Mandataire: **Bronchart, Quentin**
**Cabinet Hautier**
**20, rue de la Liberté**
**06000 Nice (FR)**

(56) Documents cités:
WO-A1-2017/222905   DE-C1- 10 235 581
US-A- 3 133 442   US-A- 3 874 236
US-A- 3 975 958   US-A1- 2015 198 441

**Description**

DOMAINE TECHNIQUE DE L'INVENTION

La présente invention concerne les Systèmes de Stockage Thermiques (SST) par Matériaux à Changement de Phase (MCP) solide/liquide, et plus particulièrement, un dispositif de mesure permettant de mesurer l'état de charge du SST. Tous les SST présentant, au moins en partie, une séparation selon un axe principal, préférablement vertical, de la phase liquide et de la phase solide du MCP sont susceptibles de pouvoir intégrer l'invention.

La présente invention trouvera son application dans les réseaux de chaleur et/ou de froid, urbains, ruraux ou industriels ainsi que dans le stockage de l'énergie solaire. L'invention pourra également trouver des applications dans l'habitat ou encore le transport thermique hors réseaux (camions, bateaux...).

ÉTAT DE LA TECHNIQUE

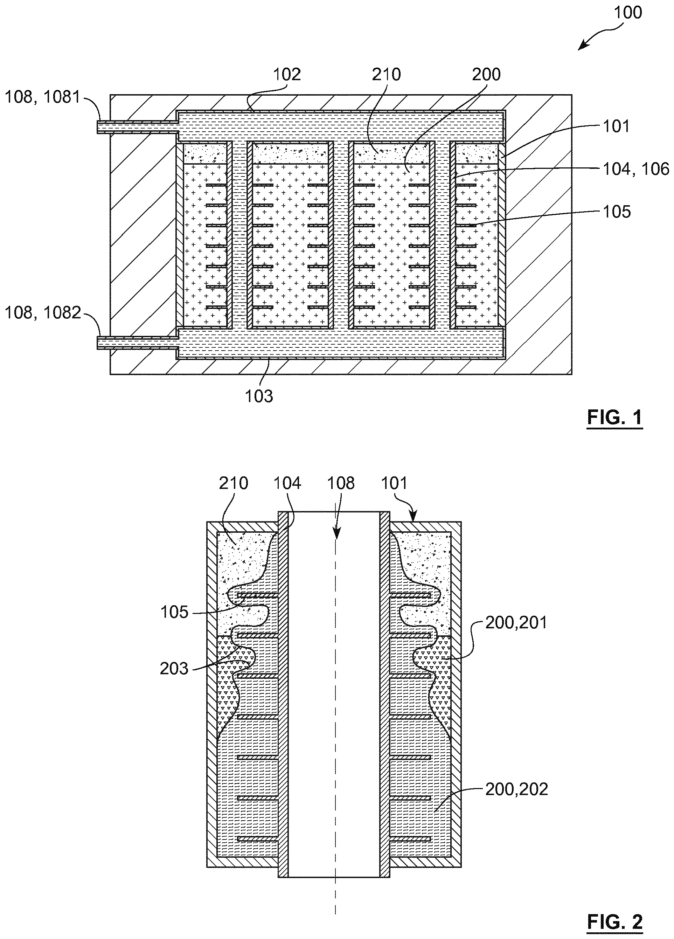

La figure 1 illustre schématiquement une coupe verticale d'un type de SST 100 par MCP 200 du type à tubes 104 et calandre 101, chaque tube 104 comprenant des ailettes 105 s'étendant radialement depuis une partie tubulaire 106 du tube 104, et illustre son architecture complexe.

La figure 2 montre une coupe verticale d'un réservoir 101 de SST à tubes 104 et calandre 101 lorsque le SST 100 se trouve dans un état partiellement déchargé et illustre plus particulièrement la propension du MCP 200 à accrocher aux surfaces d'échange thermique, et notamment aux ailettes 105 des tubes 104, lorsqu'il se solidifie.

Plusieurs techniques de mesure de l'état ou du taux de charge $\tau$ d'un SST 100 par MCP 200 sont connues.

Une première d'entre elles consiste à localiser le front de séparation 203 entre les phases liquide 201 et solide 202 du MCP 200, ce front de séparation 203 étant notamment présent pour un état de charge intermédiaire du SST 100. L'état de charge d'un SST 100 peut effectivement être mesuré à partir d'une valeur de volume de la phase liquide 201 et le calcul de cette valeur peut être envisagé en déterminant la position du front de séparation 203 dans le réservoir 101 comprenant une quantité donnée de MCP 200. Toutefois, comme illustré par la figure 2, l'architecture particulière des SST 100 par MCP 200, ainsi que la propension du MCP 200 à accrocher aux surfaces d'échange thermique lorsqu'il se solidifie engendrent un arrangement complexe du front de séparation 203.

Pour déterminer l'emplacement du front de séparation 203, la disposition de capteurs agencés à différentes hauteurs du réservoir 101 et configurés pour indiquer la présence d'une phase liquide 201 ou solide 202 est une solution qui a été envisagée. L'utilisation de différents types de capteurs a été envisagée par l'université de Brandebourg dont les travaux ont abouti aux conclusions suivantes. Tout d'abord, les capteurs de température ne sont pas adaptés car le changement de phase du MCP 200 s'opère sans changement de température. L'utilisation de capteurs mesurant la différence de conductivité du milieu n'est pas non plus probante car ces capteurs ne sont pas assez sensibles. Finalement, l'utilisation de capteurs évaluant les propriétés optiques du volume de MCP 200 adjacent a été retenue comme le meilleur moyen d'évaluer l'état du MCP 200 en un point. Le cas d'application envisagé consiste en un SST 100 par MCP 200 comprenant un simple panneau rempli de MCP 200 et voué à recouvrir les murs d'un bâtiment pour en augmenter l'inertie thermique ; ce type de SST 100 ne comporte donc pas d'échangeur noyé 104 dans le MCP 200.

Pour une application à un SST 100 par MCP 200 tel qu'illustré sur les figures 1 et 2, cette méthode requiert l'utilisation d'un nombre important de capteurs, ce qui engendrent plusieurs problèmes. Premièrement, la maintenance des capteurs est difficile car ils sont noyés dans le MCP 200 et on ne peut pas les retirer aisément. Deuxièmement, du fait du nombre important de capteurs nécessités, de nombreuses données doivent être acquises et interprétées pour permettre une mesure précise.

Une autre technique de mesure du taux de charge $\tau$ d'un SST 100 par MCP 200 est décrite dans le document WO 2012/156343 A1. Il y est proposé de déterminer la fraction de la phase liquide 201 par rapport à la phase solide 202 par l'intermédiaire d'ondes radars. Cette technique est aussi uniquement adaptée à la mesure du taux de charge $\tau$ d'un simple panneau rempli de MCP 200 sans échangeur noyé 104. Effectivement, dans un cas d'application représentatif d'un SST 100 par MCP 200 tel qu'illustré sur les figures 1 et 2, la présence importante de métal constituant notamment la calandre 101 et l'échangeur noyé 104 avec ses paries tubulaires 106 et ses ailettes 105 engendrerait de telles réverbérations et absorptions des ondes que les données de mesure seraient inexploitables.

Une mesure du taux de charge $\tau$ au travers d'un bilan énergétique peut encore être envisagée. Un des moyens pour connaitre l'état de charge d'un SST 100 consiste effectivement à enregistrer son historique d'exploitation. Pour cela, la quantité d'énergie injectée ou prélevée au SST 100 est mesurée à l'aide d'un débitmètre et de capteurs de températures placés dans le circuit 108 du fluide caloporteur 109, en entrée 1081 et sortie 1082 du circuit 108. En connaissant l'état de charge initial du SST, lors de sa mise en service, on peut théoriquement connaitre son état de charge suite à des opérations successives de charge et de décharge. Toutefois, cette technique comporte de nombreux désavantages. Tout d'abord, afin de pouvoir déterminer l'historique réel d'exploitation du SST 100, les pertes thermiques au niveau des surfaces extérieures du réservoir 101 doivent être finement simulées ou mesurées et prises en compte.

Ensuite, et dans tous les cas, la précision de l'estimation du taux de charge $\tau$ va se dégrader au cours du temps par l'accumulation d'erreurs. Enfin, un tel dispositif de mesure requiert beaucoup d'éléments électroniques d'acquisition, de mémoire et de calculs, le rendant couteux et peu fiables.

Une autre technique de mesure du taux de charge $\tau$ d'un SST 100 par MCP, proposée notamment par l'institut de recherche et de développement autrichien ASIC, consiste à mesurer la variation de pression dans le ciel 210 du réservoir 101. Tel qu'illustré sur les figures 1 et 2, le ciel 210 d'un réservoir 101 correspond à un volume mort situé dans sa partie haute ; il est ainsi composé d'un gaz inerte afin d'éviter d'éventuelles interactions entre le MCP 200 et l'air qui pourraient dégrader les propriétés du MCP. Cette technique de mesure repose sur le fait que les MCP utilisés présentent une forte expansion volumique lors de leur fusion (souvent de l'ordre de 10% à 20%). Une élévation de pression a donc lieu dans le ciel 210 entre un état de décharge totale du SST 100 pour lequel le MCP est entièrement dans sa phase solide 202 et un état de charge totale du SST pour lequel le MCP est entièrement dans sa phase liquide 201. Il est ainsi possible de corréler la pression mesurée dans le ciel 210 à la fraction de phase liquide 201 de MCP 200 formée et donc de déterminer le taux de charge $\tau$.

En pratique cette méthode présente de nombreux inconvénients. Premièrement, elle nécessite une parfaite étanchéité du réservoir 101 afin de pouvoir observer les variations de pression ; or rendre un réservoir 101 complétement hermétique est difficile et couteux du fait que les soudures ou assemblages mécaniques doivent être d'une très bonne qualité. De plus, ces variations de pression soumettent le réservoir 101 à des augmentations fortes de pression : par exemple pour un réservoir de 3 m de haut, une hauteur de ciel 210 de 100 mm et une expansion volumique du MCP 200 de 15 %, la pression dans le ciel 210 peut atteindre 4 bars. Cet aspect peut avoir un impact non-négligeable sur le coût du SST 100. Par ailleurs, l'influence de la température sur la pression du ciel 210 doit aussi être prise en compte car son impact peut être non-négligeable. Enfin, cette technique n'est, par définition, applicable qu'aux seuls MCP présentant une variation volumique suffisante lors du changement de phase.

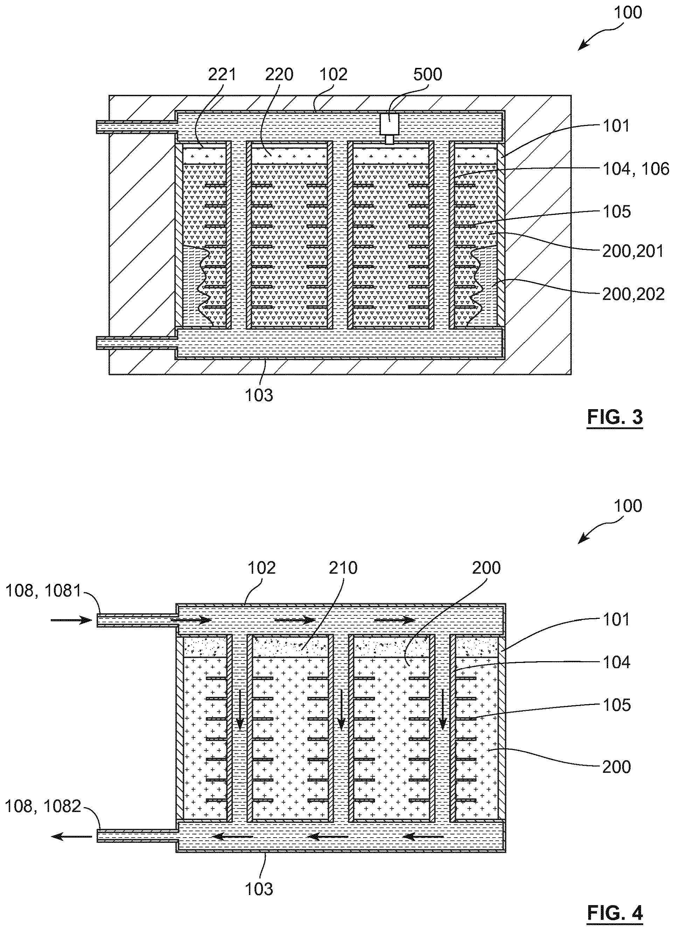

En référence à la figure 3, une autre technique pour mesurer l'état de charge d'un SST 100 par MCP 200 peut encore consister en une mesure du niveau d'un fluide de mesure 220. Par exemple, le document WO 2016051377 A1 consiste en l'ajout d'un fluide de mesure 220 compatible et non miscible avec le MCP 200 contenu dans le réservoir 101. Ce fluide de mesure 220 doit être moins dense que le MCP 200 en phase liquide 201 pour rester en partie haute du réservoir 101. La quantité de fluide de mesure 220 doit être suffisante pour s'assurer que la surface apparente du fluide de mesure en partie haute du réservoir 101 soit plane lorsque le SST 100 est totalement déchargé. Toute hausse ou baisse du niveau de ce fluide de mesure 220 est causée par la fusion/solidification du MCP 200, du fait de la variation volumique du MCP entre ses phases solide et liquide. Il est donc possible d'établir une loi fournissant l'état de charge du SST en fonction du niveau de la surface apparente 221 du fluide de mesure 220, ce niveau pouvant être mesuré par un capteur 500 *ad hoc.*

Le principal inconvénient de cette technique de mesure est la quantité de fluide de mesure 220 nécessaire pour recouvrir tout le MCP 200 quel que soit l'état de charge du SST 100. L'impact sur la compacité du SST est direct et éventuellement non-négligeable. De plus, cette technique est limitée, par définition, aux MCP présentant une expansion volumique suffisante lors du changement de phase. Un autre technique de mesure du taux de charge d'un SST par MCT est décrite dans le document DE 102 35 581 C1, qui divulgue le préambule de la revendication 1 et propose la disposition de capteurs piézoélectriques dans le réservoir ou attaché à la paroi extérieure du réservoir.

L'objet de l'invention est de répondre, au moins en partie, aux limitations précédemment exposées. L'objet de l'invention est plus particulièrement de fournir un SST par MCP qui intègre un dispositif de mesure du taux de charge $\tau$ du SST qui réponde, au moins en partie, aux limitations précédemment exposées.

RÉSUMÉ DE L'INVENTION

Pour atteindre cet objectif, la présente invention prévoit un système de stockage thermique (SST) par matériau à changement de phase (MCP) comprenant :

- Un réservoir destiné à contenir un MCP, et
- Un dispositif de mesure d'un paramètre représentatif du taux de charge $\tau$ du SST.

Plus particulièrement, le MCP change de phase par fusion/solidification et est configuré pour qu'une partie d'un front de séparation entre sa phase liquide et sa phase solide ait, dans le réservoir, une position $H_{MCP,sol}$ représentative d'un taux de charge $\tau$ du SST. Le dispositif de mesure d'un paramètre représentatif du taux de charge $\tau$ du SST est agencé au moins en partie dans le réservoir.

Le dispositif de mesure comprend :

- un organe vibratoire,
- un dispositif d'excitation dudit au moins un organe vibratoire, et

- un capteur d'un paramètre de vibration.

L'organe vibratoire est configuré pour être destiné à traverser la partie du front de séparation de sorte à présenter au moins :

◦ une partie libre en vibration au moins partiellement immergée dans la phase liquide et
◦ une partie statique du fait de son ancrage dans la phase solide, la partie libre en vibration présentant ainsi une longueur dite de vibration $L_{vib}$ représentative de la position $H_{MCP,sol}$ de ladite partie du front de séparation dans le réservoir.

Le dispositif d'excitation est configuré pour induire une excitation de la partie libre en vibration et le capteur est configuré pour mesurer un paramètre de vibration de la partie libre en vibration, de sorte que l'excitation induite soit telle que le paramètre de vibration mesuré dépend de la longueur de vibration $L_{vib}$ de la partie libre en vibration.

Dès lors, la mesure du paramètre de vibration est représentative du taux de charge $\tau$ du SST.

Ainsi, le SST intègre avantageusement un dispositif de mesure comprenant un organe vibratoire agencé dans le réservoir destiné à contenir le MCP de sorte que ses fréquences propres de vibrations soient révélatrices d'une certaine quantité de MCP en phase liquide dans le réservoir et donc du taux de charge $\tau$ du SST.

Ainsi, l'invention propose un dispositif de mesure qui offre notamment avantages suivants :

- La détermination de la position du front de séparation des phases liquide et solide du MCP permet de s'affranchir d'un éventuel arrangement complexe du front de séparation.
- La présence importante de métal constituant notamment l'échangeur noyé ne perturbe pas la mesure.
- Son adaptation est aisée à un SST par MCP avec échangeur noyé, par exemple un échangeur du type à tube(s) et ailettes.
- Il est simple, robuste et peu couteux.
- La précision ne se dégrade pas au cours du temps.
- Il n'est pas nécessaire d'étanchéifier le réservoir.
- Il n'est pas applicable aux seuls MCP présentant une variation volumique suffisante lors du changement de phase.
- Il n'impose pas de contrainte sur la compacité du SST.

Les autres objets, caractéristiques et avantages de la présente invention apparaîtront à l'examen de la description suivante et des dessins d'accompagnement. Il est entendu que d'autres avantages peuvent être incorporés.

BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La FIGURE 1 est une représentation schématique d'une coupe verticale d'un SST par MCP à tubes et calandre selon l'art antérieur ;
La FIGURE 2 est une représentation correspondant à la figure 1 dans lequel le SST est dans un état partiellement déchargé ;
La FIGURE 3 est une représentation correspondant à la figure 1 dans lequel la mesure du taux de charge $\tau$ du SST consiste en une mesure de niveau d'un fluide de mesure ; La FIGURE 4 est une autre représentation schématique d'une coupe verticale d'un SST par MCP à tubes et calandre selon l'art antérieur ;
La FIGURE 5a est une représentation schématique d'une coupe verticale d'un exemple de SST par MCP à tubes et calandre selon l'invention dans le cas idéal d'un front de séparation plan ;
La FIGURE 5b est un agrandissement de la zone référencée A illustrée sur la figure 5a ;
La FIGURE 6 est une représentation schématique correspondant à la figure 5a dans lequel le front de séparation est non-plan ;
La FIGURE 7 est une représentation schématique d'un agencement d'un tendeur d'organe vibratoire selon l'invention avec butée antiparasitage ;
La FIGURE 8 représente graphiquement l'évolution d'une fréquence fondamentale d'un organe vibratoire en fonction du taux de charge d'un SST par MCP selon l'invention ; et
La FIGURE 9 représente schématiquement une partie d'un organe vibratoire selon un mode de réalisation de l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

DESCRIPTION DÉTAILLÉE DE L'INVENTION

De manière facultative, l'invention peut en outre présenter au moins l'une quelconque des caractéristiques optionnelles suivantes :

- le dispositif de mesure comprend en outre au moins un calculateur auquel la mesure du paramètre de vibration est transmise par le dispositif de mesure, par exemple sous la forme d'un signal de mesure, le calculateur étant configuré pour en déduire au moins une valeur de fréquence propre $f_n$ de vibration de la partie libre en vibration de l'organe vibratoire, puis pour calculer le taux de charge $\tau$ du SST au moins en fonction de la au moins une valeur de fréquence propre $f_n$, le calcul du taux de charge $\tau$ du SST étant en outre éventuellement basé sur une loi empirique déterminée en fonction de données d'étalonnage du dispositif de mesure, la loi empirique faisant correspondre la au moins une valeur de fréquence propre $f_n$ à un taux de charge $\tau$ du SST;

- lequel le dispositif d'excitation est configuré pour induire une excitation transversale de la partie libre en vibration de l'organe vibratoire ;

- l'organe vibratoire comprend une première extrémité fixée au réservoir, de préférence fixée à une première plaque collectrice du réservoir, et s'étend depuis la première extrémité jusqu'à être destiné à traverser ladite partie du front de séparation ; le cas échéant, l'organe vibratoire comprend en outre une seconde extrémité fixée au réservoir, de préférence fixée à une seconde plaque collectrice du réservoir, à l'opposé de la première extrémité relativement à ladite partie du front de séparation ;

- l'organe vibratoire est configuré pour être contraint en une tension T déterminée de part et d'autre de ladite partie du front de séparation qu'il est destiné à traverser, la tension T étant de préférence comprise entre 100 et 5000 N, et l'organe vibratoire présente une masse linéique $\mu_{OV}$ déterminée, de sorte qu'au moins un mode propre de vibration de sa partie libre en vibration soit déterminé en fonction de la tension T, de la masse linéique $\mu_{OV}$ et de la longueur de vibration $L_{vib}$; un paramètre adimensionnel $A = \dfrac{12\mu_{liq}L_{vib}}{\sqrt{\mu_{OV}T}}$ du SST étant de préférence strictement inférieur à 1, voire inférieur à 0,1 où $\mu_{liq}$ est la viscosité dynamique de la phase liquide du MCP destiné à être contenu dans le réservoir ;

- le SST comprend en outre un tendeur configuré pour régler une tension T contraignant l'organe vibratoire, le SST comprenant en outre le cas échéant une butée configurée conjointement avec l'organe vibratoire pour éviter le parasitage des modes de vibration de la partie libre en vibration de l'organe vibratoire par le tendeur.

- le dispositif d'excitation est configuré pour induire une excitation entretenue de la partie libre en vibration de l'organe vibratoire, l'excitation entretenue étant variablement paramétrée pour rechercher, par exemple par balayage d'une gamme de fréquence déterminée, au moins un mode propre de vibration de la partie libre en vibration de l'organe vibratoire ;

- le dispositif d'excitation est configuré pour induire mécaniquement l'excitation de la partie libre en vibration de l'organe vibratoire, le dispositif d'excitation comprenant par exemple au moins l'un parmi :

  ◦ Au moins un plectre configuré pour mettre en vibration l'organe vibratoire par pincement, et
  ◦ Au moins un marteau configuré pour mettre en vibration l'organe vibratoire par frappement ;

- la partie libre en vibration de l'organe vibratoire comprend au moins une partie constituée en un matériau magnétique et consistant le cas échéant en au moins une pièce rapportée, et le dispositif d'excitation est configuré pour induire magnétiquement l'excitation de la partie libre en vibration de l'organe vibratoire, cette excitation magnétique étant le cas échant induite ou renforcée par excitation magnétique de la au moins une pièce rapportée ;

- le capteur comprend au moins l'un parmi :

◦ un capteur de champ électromagnétique, tel qu'un microphone magnétique,
◦ un capteur acoustique, tel qu'un microphone acoustique, et
◦ un capteur optique, tel qu'une caméra ;

- le paramètre de vibration de la partie libre en vibration de l'organe vibratoire consiste en au moins l'un parmi :

◦ une amplitude de vibration, voire une amplitude maximale de vibration,
◦ une fréquence de vibration, voire une fréquence propre de vibration, et,
◦ lorsque la partie libre en vibration de l'organe vibratoire comprend au moins une partie constituée en un matériau magnétique, une variation de champ électromagnétique générée par la vibration de la au moins une partie constituée en un matériau magnétique ;

- l'organe vibratoire comprend une corde ayant de préférence une section transversale présentant un diamètre compris entre 0,1 mm et 10 mm, de préférence compris entre 0,5 mm et 5 mm, la corde étant par exemple constituée au moins en partie en au moins un matériau compatible avec le MCP destiné à être contenu dans le réservoir et choisi parmi l'acier, par exemple un acier magnétique, et une matière plastique, par exemple un polyamide tel que le nylon, la corde pouvant encore être une corde filée constituée d'une âme, par exemple en matière plastique, sur laquelle un fil, par exemple en acier, est enroulé ;

- le SST est du type à tubes et calandre, au moins un tube comprenant le cas échéant des ailettes s'étendant depuis le pourtour extérieur d'une partie tubulaire du tube, l'organe vibratoire étant de préférence disposé de façon sensiblement parallèle au tube. Selon un mode de réalisation, le SST comprend une pluralité de tubes. L'organe vibratoire est de préférence disposé de façon sensiblement équidistante d'un ensemble de tubes de ladite pluralité et adjacents entre eux ;

- un volume de gaz appelé ciel est ménagé dans le réservoir, le SST comprenant le cas échéant un dispositif de régulation du gaz et de la pression de ce gaz dans le ciel ;

- le MCP destiné à être contenu dans le réservoir présente une variation volumique lors du changement de phase inférieure à 20 %, de préférence inférieure à 10%;

- le MCP destiné à être contenu dans le réservoir comprend au moins l'un parmi : de l'eau, un sel, tel que le nitrate de lithium, un hydrate de sel, tel que l'acétate de sodium trihydraté, un acide gras, tel que l'acide stéarique, un alcool de sucre, tel que le xylitol, et leur mélange, avec ou sans additif tensio-actif.

On entend de préférence par « organe vibratoire » un organe présentant potentiellement à la fois une partie libre en vibration et une partie statique. Notons qu'un organe vibratoire de nature piézoélectrique ne semble pas pouvoir présenter à la fois une partie libre en vibration et une partie statique.

On entend par « fréquence propre » (« natural frequency » selon la terminologie anglo-saxonne) de l'organe vibratoire 300 ou plus particulièrement de sa partie libre en vibration 301, la fréquence à laquelle l'organe vibratoire 300 ou sa partie libre en vibration 301 oscille lorsqu'il est en évolution libre, c'est-à-dire sans force excitatrice extérieure, ni forces dissipatives (frottements ou résistances par exemple). Toutefois, dans le cas d'une évolution amortie, la fréquence propre garde toute sa pertinence car c'est la fréquence pour laquelle les pertes sont minimales ; on peut parler alors de fréquence de résonance. Plusieurs modes propres de vibration de rangs différents peuvent être définis pour une longueur de vibration $L_{vib}$ donnée d'une partie libre en vibration 301 d'un organe vibratoire 300 donné. A chaque mode propre correspond une fréquence propre. En outre, une fréquence propre d'un mode propre de rang supérieur à 1 égale un multiple de la fréquence propre du mode propre de premier rang. Ainsi, seule la détermination d'une fréquence propre d'un mode propre de rang connu est requise pour pouvoir déterminer la fréquence propre correspondant aux modes propres de rangs différents.

On entend par excitation ou vibration « transversale » de l'organe vibratoire 300 ou de sa partie libre en vibration 301, une excitation ou vibration ayant une composante dans au moins une direction perpendiculaire à une longueur de l'organe vibratoire 300 (c'est-à-dire une direction selon laquelle l'organe vibratoire s'étend principalement) ou de sa partie libre en vibration 301. L'organe vibratoire 300 est en effet sensiblement longiligne et présente une longueur supérieure à ses autres dimensions, au moins de sorte à pouvoir s'étendre de part et d'autre du front de séparation 203 en présentant une partie libre en vibration 201 apte à entrer notamment en vibration transversale.

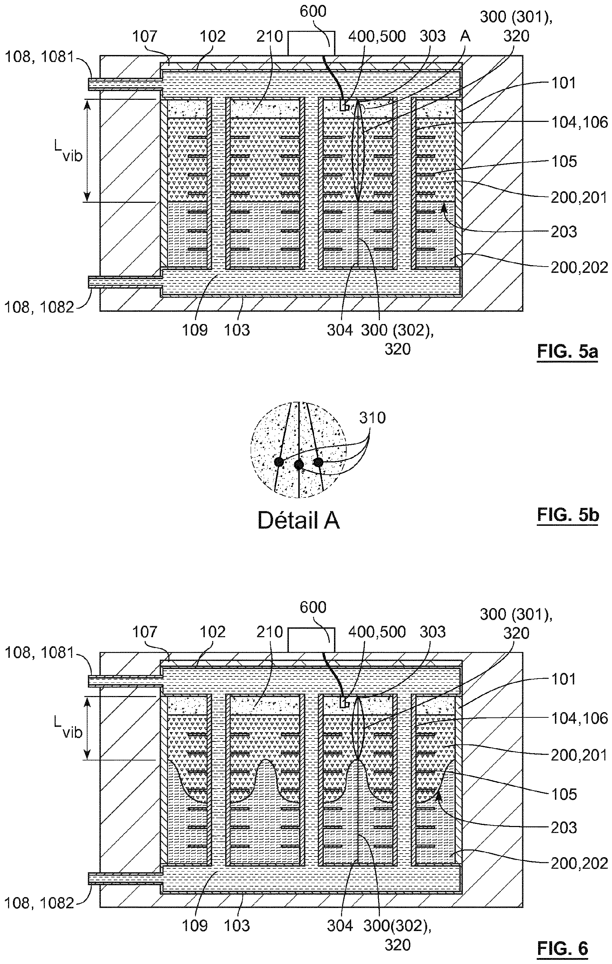

Une vibration transversale de la partie libre en vibration 301 d'un organe vibratoire 300 est représentée sur les figures 5a et 6. Cette représentation consiste plus particulièrement à dessiner la partie libre en vibration 301 dans trois positions de vibration différentes, l'une centrée correspondant à une position intermédiaire de vibration, les deux autres correspondant à des positions de vibration extrêmes à gauche et à droite de la position centrée. La double flèche séparant les positions de vibration extrêmes à gauche et à droite illustre l'amplitude transversale de la vibration.

On entend par métal ou matériau « compatible » avec le MCP 200, un métal ou un matériau qui ne réagit pas ou qui ne dégrade pas, ou n'est pas dégradé par, le MCP 200, par exemple par corrosion.

On entend par 'haut' et 'bas', ou leurs dérivés, une qualité de positionnement relatif d'un élément du SST 100 lorsque celui-ci est installé de façon fonctionnelle, le 'haut' étant orienté à l'opposé du sol et le 'bas étant orienté vers le sol.

La présente invention prévoit un SST 100 par MCP 200 comprenant :

- Un réservoir 101 destiné à contenir un MCP 200, et
- Un dispositif de mesure du taux de charge $\tau$ du SST 100.

Plus particulièrement, le MCP 200 change de phase par fusion/solidification. Il est configuré pour qu'au moins une partie d'un front de séparation 203 entre sa phase liquide 201 et sa phase solide 202 ait, dans le réservoir, une position $H_{MCP,sol}$ représentative d'un taux de charge $\tau$ du SST 100.

La figure 5a représente un SST 100 par MCP 200 dit à tubes 104 et calandre 101 dans lequel le front de séparation 203 entre phases liquide 201 et solide 202 du MCP 200 est idéalement plan. Dans ce cas, chaque partie du front de séparation 203 est identiquement et parfaitement représentative du taux de charge $\tau$ du SST.

La figure 6 représente un SST 100 par MCP 200 à tubes 104 et calandre 101 dans lequel le front de séparation 203 entre phases liquide 201 et solide 202 du MCP 200 n'est pas plan. Dans ce cas, une partie du front de séparation 203 peut être plus représentative de l'état de charge du SST 100 qu'une autre partie du front de séparation 203. Dans l'exemple illustré, on peut considérer que la partie du front de séparation 203 constituant sa zone d'inflexion entre deux tubes 104 est plus représentative de l'état de charge du SST 100 qu'une partie du front de séparation 203 s'étendant de façon abrupte depuis une partie tubulaire 106 d'un tube 104 ou depuis les parois intérieures de la calandre 101.

Le dispositif de mesure comprend :

- au moins un organe vibratoire 300, tel qu'au moins une corde 320, une lame métallique ou un ressort,
- au moins un dispositif d'excitation 400 dudit au moins un organe vibratoire 300, et
- au moins un capteur 500 d'un paramètre de vibration.

L'organe vibratoire 300 est configuré pour être destiné à traverser ladite au moins une partie du front de séparation 203 de sorte à présenter au moins :

- une partie libre en vibration 301 au moins partiellement immergée dans la phase liquide 201 du MCP 200, et
- une partie statique du fait de son ancrage dans la phase solide 202 du MCP 200,

lorsque le MCP 200 destiné à être contenu dans la calandre 101 comprend une phase liquide 201 et une phase solide 202, c'est-à-dire dans un état de charge intermédiaire du SST 100.

L'organe vibratoire 300 a une forme globalement longiligne. Il s'étend principalement selon une direction désignée direction principale. Il s'étend de part et d'autre du front de séparation 203 de façon sensiblement perpendiculaire à un plan dans lequel s'inscrit au moins en moyenne le front de séparation 203. La configuration de l'organe vibratoire 300 par rapport au front de séparation 203, et plus particulièrement par rapport à la partie du front de séparation 203, n'est pas nécessairement strictement perpendiculaire ; il suffit que la partie libre en vibration 301 de l'organe vibratoire 300 présente une longueur dite de vibration $L_{vib}$ représentative de la position $H_{MCP,sol}$ de la partie du front de séparation 203 dans le réservoir 101, cette exigence de représentativité pouvant le cas échéant requérir par exemple un calcul trigonométrique.

Dans un état de décharge totale du SST 100, correspondant à une solidification complète du MCP 200, le MCP 200 n'est pas présent sous sa phase liquide 201 dans le réservoir 101. Dans ce cas, soit la partie libre en vibration 301 de l'organe vibratoire 300 est de longueur nulle, soit sa longueur est limitée par la hauteur correspondante du ciel 210 dans le réservoir 101.

Dans un état de charge totale du SST 100, correspondant à un état complètement liquéfié du MCP 200, le MCP 200 n'est pas présent sous sa phase solide 202 dans le réservoir 101. Dans ce cas, la partie libre en vibration 301 de l'organe vibratoire 300 est d'une longueur égale à la longueur de l'organe vibratoire 300, en considérant que l'organe vibratoire 300 est propre à vibrer sur toute sa longueur lorsqu'il n'est pas ancré dans la phase solide 202 du MCP 200.

Selon le mode de réalisation exemplifié par les figures 5a et 6, l'organe vibratoire 300 est fixé par chacune de ses extrémités 303 et 304 à une des première et seconde plaques collectrices 102 et 103 du SST 100. De la sorte, l'organe vibratoire 300 permet une mesure du taux de charge $\tau$ du SST 100 quel que soit ce taux de charge. En effet, dans un état de décharge totale, soit la partie libre en vibration 301 de l'organe vibratoire 300 est de longueur nulle et il n'est pas possible de l'exciter et donc de capter sa vibration, soit la longueur de la partie libre en vibration 301 est limitée par la hauteur du ciel 210 dans le réservoir 101 et sa vibration sera l'image de cette longueur, pour révéler l'état de décharge totale du SST 100.

Toutefois, cette double fixation de l'organe vibratoire 300 aux plaques collectrices 102 et 103 du SST 100 n'est pas nécessaire. Par exemple, il est envisagé qu'au moins un dispositif de fixation s'étende depuis une paroi latérale du pourtour intérieur du réservoir 101 avec laquelle il est solidaire de sorte de pouvoir y fixer une extrémité 303 ou 304 de l'organe vibratoire 300. Par exemple, le SST 100 peut être configuré de sorte qu'il subsiste toujours une hauteur de phase solide 202 du MCP 200 dans le réservoir 101 quel que soit l'état de charge du SST ; l'organe vibratoire 300 peut alors être configuré pour qu'une de ses extrémités 330 ou 304 soit ancrée dans la phase solide 202 du MCP 200 quel que soit l'état de charge du SST 100. Dans ce cas également, un dispositif d'ancrage, tel qu'une ancre, peut être fixé à une extrémité 303 ou 304 de l'organe vibratoire 300 de sorte à améliorer son ancrage dans la phase solide 202 du MCP 200. En alternative ou en complément, un tel dispositif d'ancrage lorsque fixé à l'extrémité basse 304 de l'organe vibratoire 300 peut présenter un poids déterminé permettant de contraindre en une tension déterminée l'organe vibratoire 300. Enfin, l'organe vibratoire 300 peut n'être fixé par aucune de ses extrémités 303 et 304 au réservoir 101 ; ceci peut par exemple être le cas lorsque l'organe vibratoire 300 consiste en une lame métallique simplement fichée dans la phase solide 202 du MCP 200.

Sans y être limité, le MCP 200 destiné à être contenu dans le réservoir 101 peut comprendre au moins l'un parmi : de l'eau, un sel, tel que l'acétate de sodium, un hydrate de sel, tel que le nitrate de magnésium hexahydraté, un alcool de sucre, tel que le xylitol, et leur mélange, avec ou sans additif tensio-actif. Un tel mélange peut être un eutectique défini comme un mélange de deux corps purs qui fond et se solidifie à température constante ; un eutectique se comporte en fait comme un corps pur du point de vue de la fusion. De tels MCP 200 ont au moins pour point commun de présenter une phase solide 202 relativement dure permettant un ancrage rigoureux de l'organe vibratoire 300. Si l'utilisation d'un MCP 200 présentant une phase solide 202 moins dure, par exemple une paraffine, était envisagée, il pourrait être utile de prendre en compte un éventuel creusement de cette phase solide 202 par la partie libre en vibration 301 de l'organe vibratoire 300 notamment en fonction de l'excitation exercée sur la partie libre en vibration 301. Une telle caractérisation est jugée relever des compétences de l'homme du métier, de sorte que l'utilisation d'un MCP 200 présentant une phase solide 202 moins dure ne permettant pas un ancrage rigoureux de l'organe vibratoire est jugée relever de la présente invention.

En outre, un large choix de MCP 200 est envisageable du fait que la mise en oeuvre de l'invention n'est pas basée, contrairement à certaines au moins des techniques de l'art antérieur, sur une nécessaire variation suffisante de volume entre phases liquide 201 et solide 202 du MCP. Le MCP 200 destiné à être contenu dans le réservoir 101 peut effectivement présenter une variation volumique lors du changement de phase inférieure à 20 %, inférieure à 10 %, voire nulle, sans que cela n'influe sur la capacité de mise en oeuvre de l'invention.

Le dispositif d'excitation 400 est configuré pour induire une excitation de la partie libre en vibration 301 de l'organe vibratoire 300.

Le capteur 500 est configuré pour mesurer un paramètre de vibration de la partie libre en vibration 301.

L'excitation induite par le dispositif d'excitation 400 doit être telle que le paramètre de vibration mesuré dépend de la longueur de vibration $L_{vib}$ de la partie libre en vibration 301 de l'organe vibratoire 300.

De façon non limitative, le paramètre de vibration de la partie libre en vibration 301 de l'organe vibratoire 300 peut ainsi consister en au moins l'un parmi :

- une amplitude de vibration, voire une amplitude maximale de vibration,
- une fréquence de vibration, voire une fréquence propre de vibration, et
- lorsque la partie libre en vibration 301 de l'organe vibratoire 300 comprend au moins une partie constituée en un matériau magnétique, une variation de champ électromagnétique générée par la vibration de la partie constituée en un matériau magnétique.

Dès lors, que le paramètre de vibration dépend de la longueur de vibration $L_{vib}$ de la partie libre en vibration 301 de l'organe vibratoire 300, que cette longueur de vibration $L_{vib}$ est représentative de la position $H_{MCP,sol}$ de la partie du front de séparation 203 dans le réservoir 101 et que cette position $H_{MCP,sol}$ est représentative du taux de charge $\tau$ du SST 100, la mesure du paramètre de vibration est représentative du taux de charge $\tau$ du SST 100.

L'invention permet ainsi la mesure du taux de charger du SST 100 par l'excitation d'un organe vibratoire 300 configuré de sorte que sa vibration soit représentative du taux de charge $\tau$ du SST 100. Plus particulièrement, les modes de vibration propres, dépendant de la longueur de vibration $L_{vib}$ de la partie libre en vibration 301 de l'organe vibratoire 300, sont directement l'image de la quantité de MCP 200 en phase liquide 201 dans le réservoir 101 ; or la quantité de MCP 200 en phase liquide 201 est directement proportionnelle au taux de charge $\tau$ du SST 100.

Le dispositif de mesure peut comprendre en outre au moins un calculateur 600 auquel la mesure du paramètre de vibration est transmise par le capteur, par exemple sous la forme d'un signal de mesure. Le calculateur 600 est alors configuré pour déduire de la mesure ou du signal de mesure au moins une valeur de fréquence propre $f_n$ de vibration

de la partie libre en vibration 301 de l'organe vibratoire 300, puis pour calculer le taux de charge $\tau$ du SST 100 au moins en fonction de ladite au moins une valeur de fréquence propre $f_n$.

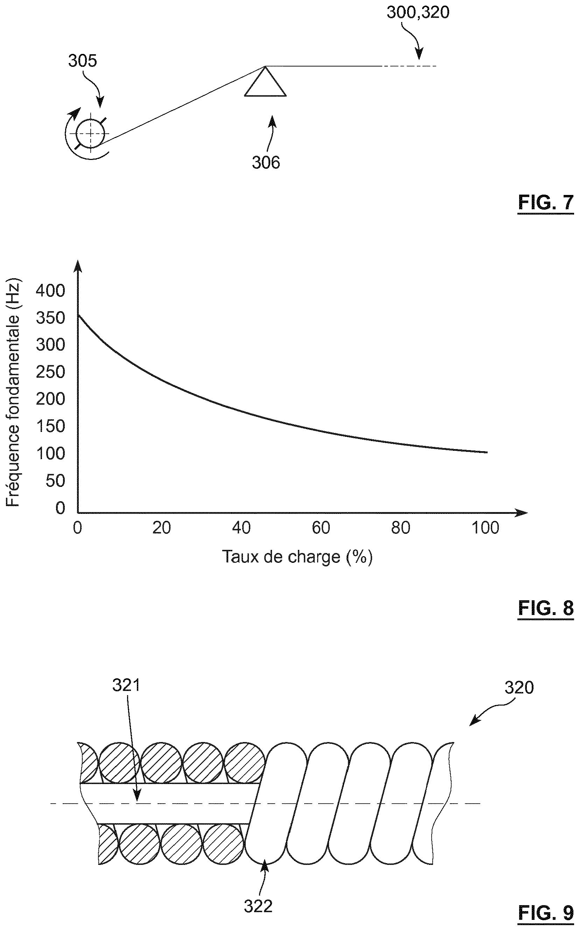

Le calcul du taux de charge $\tau$ du SST 100 peut être basé sur une loi empirique déterminée en fonction de données d'étalonnage du dispositif de mesure. La loi empirique fait plus particulièrement correspondre ladite au moins une valeur de fréquence propre $f_n$ à un taux de charge $\tau$ du SST 100, par exemple à la façon du graphe représenté sur la figure 8.

Le calculateur 600 peut par ailleurs être relié à un afficheur configuré pour afficher le taux de charge calculé et éventuellement d'autres paramètres d'intérêts, tel que l'évolution du taux de charge. Le calculateur 600 peut encore être propre à communiquer le taux de charge calculé à un serveur distant, par exemple un serveur de gestion de ressources énergétiques d'un fournisseur de telles ressources.

Le signal de mesure en entrée d'un calculateur 600 peut être électrique ou numérique en fonction du capteur 500 utilisé. Un traitement électronique du signal de mesure peut être nécessaire qui fait intervenir de façon connue des filtres et autres amplificateurs.

Il est à noter que la vibration de la partie libre en vibration 301 de l'organe vibratoire 300 n'est pas nécessairement transversale, mais peut également être longitudinale. Par exemple, lorsque l'organe vibratoire 300 comprend un ressort, et plus particulièrement un ressort à spires, le dispositif d'excitation 400 peut être configuré pour ponctuellement ou alternativement compresser et/ou décompresser longitudinalement les spires du ressort entre elles. Un paramètre de vibration choisi parmi ceux introduits plus haut peut alors être mesuré qui dépend du nombre de spires du ressort qui ne sont pas ancrées dans la phase solide 202 du MCP 200, autrement dit qui dépend de la hauteur de la partie excitable du ressort, cette hauteur correspondant à la longueur de vibration $L_{vib}$ de la partie libre en vibration 301 de l'organe vibratoire 300.

On considère par la suite un mode de réalisation particulier de l'invention dans lequel l'organe vibratoire 300 est une corde 320 et le SST est du type à « tubes et calandre » vertical, c'est-à-dire dont le front de séparation 203 est destiné à s'étendre globalement dans un plan horizontal. Comme discuté en introduction, ce type de SST 100 présente une architecture complexe rendant difficile voire impossible la mise en oeuvre des techniques connues de mesure du taux de charge d'un SST. Si l'invention est décrite ci-dessous par sa mise en oeuvre dans ce type de SST 100 à architecture complexe, c'est pour montrer qu'elle y est particulièrement bien adaptée, notamment relativement aux techniques connues. Pour autant, l'invention n'est nullement limitée à une application à un SST 100 à tubes et calandre vertical. En particulier, elle trouve à s'appliquer dans le cas d'un SST 100 à tubes et calandre horizontal, c'est-à-dire dont le front de séparation 203 est destiné à s'étendre globalement dans un plan vertical, pour peu qu'au moins une partie d'un front de séparation 203 entre la phase liquide 201 et la phase solide 202 du MCP 200 ait, dans le réservoir 101, une position notamment verticale représentative d'un taux de charge $\tau$ du SST 100. L'application de l'invention à un SST 100 par MCP 200 comprenant un simple panneau rempli de MCP 200 et par exemple voué à recouvrir les murs d'un bâtiment pour en augmenter l'inertie thermique, ce type de SST 100 ne comportant généralement pas d'échangeur noyé 104 dans le MCP 200, est considéré être immédiate. Il est encore envisagé que l'invention soit appliquée à un SST 100 par MCP 200 dit « à contact direct ». Dans ce type de SST, le MCP 200 est en contact direct avec le fluide caloporteur. A titre d'exemple, et afin d'illustrer l'applicabilité de l'invention à ce type de SST, son fonctionnement est brièvement décrit ci-après. Pendant la charge, de l'huile chaude, en tant que fluide caloporteur, arrive par un tube d'alimentation et cède de l'énergie au MCP 200, entraînant la fonte de celui-ci. Ayant une densité plus faible que le MCP 200, l'huile remonte dans la partie haute du réservoir 101 où elle est pompée pour retourner dans l'échangeur où elle est réchauffée. Au cours de la décharge, l'huile froide arrive par le tube d'alimentation, elle monte en température en échangeant de l'énergie avec le MCP 200 qui se solidifie, puis remonte dans la partie haute du réservoir où elle est de nouveau pompée ; dans l'échangeur, l'huile cède de la chaleur à un fluide secondaire. Il apparaît donc que ce type de SST 100 par MCP 200 à contact direct conduit au moins ponctuellement à une situation d'un réservoir 101 comprenant un MCP présent dans ses deux phases liquide 201 et solide 202 séparées par un front de séparation dont une partie présente potentiellement une position représentative du taux de charge $\tau$ du SST 100. La présence dans le réservoir 101 d'une quantité déterminée d'huile en tant que fluide caloporteur peut en outre être intégrée au calcul du taux de charge $\tau$ du SST 100 selon l'invention.

Dans un SST 100 à tubes et calandre vertical, tel qu'illustré notamment sur la figure 4, un fluide caloporteur, tel que de l'eau, circule à l'intérieur des tubes 104 et un MCP 200 à phase liquide moins dense que sa phase solide est contenu dans la calandre (ou équivalemment le réservoir) 101. La charge d'un tel SST 100 consiste à introduire le fluide caloporteur chaud par une première plaque collectrice 102 haute du SST 100 et à récupérer, par une seconde plaque collectrice 103 basse du SST 100, le fluide caloporteur refroidi pour avoir céder des calories au MCP 200. Cette dynamique, combinée au fait que la phase liquide 201 du MCP 200 est moins dense que sa phase solide 202, permet de s'assurer que la phase liquide 201 du MCP 200 se trouve toujours sur le haut du réservoir 101 au-dessus de la phase solide 202 du MCP 200. L'on évite ainsi une inclusion de MCP en phase liquide dans du MCP en phase solide, une telle inclusion étant susceptible de provoquer d'importantes contraintes mécaniques sur le SST 100.

Dans le cas illustré sur les figures 5a et 6, le front de séparation 203 s'inscrit globalement dans un plan horizontal, mais il est envisagé que le front de séparation puisse être incliné par rapport à l'horizon, voire globalement vertical, l'essentiel étant qu'au moins une partie du front de séparation 203 soit, de par sa position dans le réservoir 101, représentative de l'état de charge du SST 100.

L'invention selon le mode de réalisation particulier décrit ci-dessus est représentée sur la figure 5a. La figure 5a est plus particulièrement une vue en coupe représentant un SST 100 par MCP 200 comprenant :

- deux tubes 104 munis d'ailettes 105,
- une corde (ou câble) 320 verticale contrainte en tension entre les deux plaques collectrices 102 et 103 du réservoir 101, en tant qu'organe vibratoire 300,
- un dispositif d'excitation 400 de la partie libre en vibration 301 de la corde 320, et
- un dispositif de mesure 500 d'un paramètre de vibration de la partie libre en vibration 301 de la corde 320.

L'excitation peut être ponctuelle (comme sur une guitare ou un piano) ou bien entretenue, le cas échéant avec recherche de la fréquence de résonnance de la partie libre en vibration 301 de la corde 320.

Le dispositif de mesure 500 peut plus particulièrement être un dispositif de mesure des fréquences propres d'oscillation de la corde 320 dans le cas d'une excitation ponctuelle ou un dispositif de mesure de l'amplitude de vibration de la corde 320 dans le cas de l'excitation entretenue et de l'éventuelle recherche de la fréquence de résonnance.

Les modes propres de vibration d'un tel système dépendent de trois facteurs :

- la tension T de la corde, exprimée en Newton ;
- sa masse linéique $\mu_{OV}$, exprimée en kg.m$^{-1}$;
- la longueur de vibration $L_{vib}$, exprimée en mètre.

Les fréquences propres de vibration ou d'oscillation de la partie libre en vibration 301 de la corde 320 sont reliées à ces paramètres par la relation suivante :

$$f_n = \frac{c}{\lambda_n} = \frac{\sqrt{T/\mu_{OV}}}{\lambda_n}$$

où $f_n$ est la fréquence propre de vibration de rang n (fréquence fondamentale pour n=1); $\lambda_n$ est la longueur d'onde associée au mode de vibration du rang n ; $c = \sqrt{T/\mu_{OV}}$ est la célérité de propagation de l'onde transversale le long de la partie libre en vibration 301 de la corde 320.

Or, dans le cas d'ondes stationnaires, les longueurs d'ondes propres sont reliées à la longueur de vibration $L_{vib}$ de la partie libre en vibration 301 de la corde 320 par la formule :

$$\lambda_n = 2L_{vib}/n \ \text{ et } \ \lambda_{fondamentale} = \lambda_1 = 2L_{vib}$$

La longueur de vibration peut par ailleurs être reliée directement à la position ou ici à la hauteur $H_{mcp,sol}$ de MCP 200 en phase solide 202 par la relation : $L_{vib} = L_{corde} - H_{mcp,sol}$.

Il s'ensuit que :

$$f_n = n \frac{\sqrt{T/\mu_{OV}}}{2L_{vib}}$$

La fréquence de plus grand intérêt est celle du mode fondamentale (n=1) qui correspond à la vibration présentant le plus d'amplitude.

Dans le cas d'un réservoir à section constante $S_{réservoir}$ destiné à comprendre les phases liquide 201 et solide 202 du MCP 200 de façon parfaitement stratifiée verticalement comme illustré sur la figure 5a, il est possible de relier simplement le taux de charge $\tau$ à la hauteur de MCP 200 en phase solide 202 :

$$\tau = 1 - \frac{masse_{mcp,sol}}{masse_{tot,mcp}} = 1 - \frac{H_{mcp,sol} \times S_{réservoir} \times \rho_{mcp,sol}}{masse_{tot,mcp}}$$

où $masse_{tot,mcp}$ est la masse totale de MCP 200 contenu dans le réservoir 101 et $\rho_{mcp,sol}$ est la masse volumique de la phase solide 202 du MCP 200.

L'équation précédente permet finalement de calculer pour ce cas de figure, le taux de charge $\tau$ pour une fréquence propre fondamentale de vibration $f_1$ de la partie libre en vibration 301 de la corde 320 :

$$\tau = 1 - \frac{\left( \frac{L_{corde} - \sqrt{T/\mu_{OV}}}{2f_1} \right) \times S_{réservoir} \times \rho_{mcp,sol}}{masse_{tot,mcp}},$$

où $L_{corde}$ est la longueur totale de la corde 320. Les paramètres autres que $f_1$ et $\tau$ intervenant dans la relation ci-dessus sont des constantes caractéristiques du réservoir 101 ou de la corde 320, de sorte qu'en mesurant l'un ou l'autre des paramètres $f_1$ et $\tau$, l'on puisse calculer l'autre de ces paramètres.

Il est à noter que le calcul ci-dessus est plus simple lorsque l'on considère une section constante $S_{réservoir}$ du réservoir 101; pour autant, il relève des compétences ordinaires de l'homme du métier d'adapter le calcul à une section non constante du réservoir 101.

Le cas idéal traité ci-dessus est un exemple permettant de comprendre le principe de fonctionnement de l'invention et les lois physiques la gouvernant. Cependant, deux phénomènes doivent être pris en compte pour son application à des SST 100 réels, plus complexes. Le premier phénomène concerne la non-planéité du front de séparation 203 entre phase liquide 201 et solide 202 du MCP 200, ce phénomène étant notamment illustré sur la figure 6. Le second phénomène concerne le fait que la phase liquide 201 du MCP 200, si elle peut laisser libre la vibration de la partie libre en vibration 301 de la corde 320, amortit tout de même plus ou moins cette vibration.

Dans un SST réel du type à tubes et calandre vertical selon l'exemple adopté, la répartition entre phases liquide 201 et solide 202 du MCP 200 dans la calandre 101 n'est en effet pas strictement verticale. Autrement dit, la propagation du front de séparation 203 a une composante radiale. Par exemple, dans le cas d'une fonte du MCP 200 par injection d'un fluide caloporteur chaud par le haut du réservoir 101, un front de fusion va se propager de haut en bas, mais aussi latéralement depuis la paroi extérieure de chaque tube. Comme cela est illustré sur la figure 6 par la double flèche verticale, une hauteur d'incertitude peut être définie qui traduit les irrégularités du front de séparation 203 par rapport à une parfaite planéité. Deux cas de figure sont possibles :

- soit la hauteur d'incertitude est bien inférieure à la hauteur du réservoir 101 et, dans ce cas, la composante radiale de la propagation du front de séparation 203 n'a que peu d'impact sur la mesure du taux de charge $\tau$,
- soit cette hauteur d'incertitude n'est pas négligeable et, dans ce cas, un étalonnage du dispositif de mesure suffit à lier fréquence propre de vibration de la partie libre en vibration 301 de la corde 320 et taux de charge $\tau$ du SST 100.

Si on considère maintenant des tubes 104 à ailettes 105, le front de séparation 203 présente des oscillations provoquées par l'inhomogénéité de la conduction thermique dans le SST 100, tel que l'illustre la figure 2. Un étalonnage du dispositif de mesure suffit là encore à lier fréquence propre de vibration de la partie libre en vibration 301 de la corde 320 et taux de charge $\tau$ du SST 100.

Plusieurs cordes réparties dans le réservoir permettent avantageusement d'affiner la mesure. Chaque corde 320 est de préférence disposée de façon sensiblement équidistante d'un ensemble correspondant de tubes 104 adjacents entre eux.

Précédemment, nous avons implicitement fait l'hypothèse d'une propagation d'onde de vibration non-atténuée le long de la corde 320. Cette hypothèse est raisonnable en termes de fréquence de résonnance pour une corde 320 vibrant dans l'air. En revanche, dans le cas d'une corde 320 vibrant dans un liquide 201 plus visqueux que l'air, la question se pose de l'influence de ce paramètre sur les oscillations. Dans la plupart des cas, la mesure ou le signal de mesure est pseudopériodique, mais la fréquence propre de vibration peut tout de même être déduite. Par contre, si le liquide 202 est beaucoup trop visqueux, la mesure ou le signal de mesure peut être totalement apériodique et il devient impossible d'en déduire la fréquence propre de vibration. Il est possible, en dimensionnant le SST 100, d'éviter l'occurrence de ce cas de figure en ajustant notamment au moins l'un parmi la tension T de la corde 320 et sa masse linéique $\mu_{OV}$.

Les considérations ci-dessous visent à définir un paramètre adimensionnel permettant d'évaluer l'impact du phénomène d'atténuation.

L'équation de d'Alembert, modélisant la propagation des ondes le long d'une corde 320 contrainte en une tension T donnée, et modifiée par un terme d'atténuation, est :

$$\frac{\partial^2 u}{\partial x^2} - \frac{1}{c^2}\frac{\partial^2 u}{\partial t^2} - \frac{Coef_{fr}}{T}\frac{\partial u}{\partial t} = 0,$$

Avec : i) $u$ correspondant à un petit déplacement transversal, ii) $c = \sqrt{T/\mu_{OV}}$ correspondant à la vitesse de propagation des ondes, iii) $Coef_{fr}$ correspondant au coefficient de frottement de la corde 320 dans le liquide 202, ce coefficient étant constant dans l'hypothèse de frottements visqueux (Re < 50) ; dès lors, $Coef_{fr} = 12\mu_{liq}$ où $\mu_{liq}$ est la viscosité dynamique du liquide 202 exprimée en Pa.s.

Afin d'adimensionner l'équation, on pose: $U = \frac{u}{L}$ ; $\tau = t\frac{c}{L}$ et $X = \frac{x}{L}$, pour obtenir :

$$\frac{\partial^2 U}{\partial X^2} - \frac{\partial^2 U}{\partial \tau^2} - A\frac{\partial U}{\partial \tau} = 0$$

où L est une longueur de référence choisie par exemple parmi la longueur maximale de la partie libre en vibration 301 de l'organe vibratoire 300 et la hauteur du réservoir 101 du SST 100, et où $A = \frac{Coef_{fr} L}{\sqrt{\mu_{OV}T}}$ est un paramètre adimensionnel qui détermine l'intensité du terme de dissipation de l'équation de propagation.

On peut considérer que si $A \ll 1$ le signal est non-amorti et que dimensionner le système pour que A soit inférieur à 0,1 permet de générer un signal pseudopériodique mesurable. Dans le cas de frottements visqueux, on a :

$$A = \frac{12\mu_{liq} L}{\sqrt{\mu_{OV}T}}.$$

Finalement, plus le réservoir 101 est haut et la viscosité du liquide 202 est grande, plus la corde 320 doit être contrainte par une tension T élevée et présenter une masse linéique $\mu_{OV}$ élevée.

Certains modes de réalisation sont encore détaillés ci-dessous à titre d'exemple.

La corde 320 du dispositif de mesure peut être un câble qui peut être fabriqué dans n'importe quel métal compatible avec le MCP 200 et avantageusement en un matériau magnétique, voire ferromagnétique, de préférence en acier. D'autres matériaux peuvent être employés comme un polyamide, tel que du nylon par exemple, si celui-ci est compatible avec le MCP 200. Le diamètre de la corde est compris entre 0,1 mm et 10 mm, de préférence entre 0,5 mm et 5 mm.

La corde 320 peut être fixée d'un côté du réservoir 101, par exemple grâce à un système dit à 'crochet et anneau' ; de l'autre côté du réservoir 101, un tendeur 305 peut être configuré pour permettre la mise en tension de la corde 320. En référence à la figure 7, le tendeur 305 peut être une clé (comme sur une guitare) ou bien un tendeur de câble plus classique. Une butée 306 sur la corde 320 peut permettre d'éviter le parasitage des modes de vibration de la corde 320 par le tendeur 305.

La mise en tension de la corde 320 n'a pas besoin d'être très précise dans le cas où un étalonnage du dispositif de mesure est prévu. D'ailleurs, si la tension T de la corde 320 varie trop au cours de son utilisation et des sollicitations thermiques, des réétalonnages peuvent être programmés. La tension T de la corde 320 peut être calculée lorsque le MCP 200 est complètement dans sa phase liquide 201 en faisant vibrer la corde 320 de sorte de mesurer *in situ* sa fréquence de résonnance, les autres paramètres, à savoir la masse linéique $\mu_{OV}$ et la longueur de vibration $L_{vib}$, étant fixés. La tension T de la corde sera préférentiellement comprise entre 100 N et 5000 N.

Le couple tension/diamètre est à adapter au cas par cas, selon la hauteur du réservoir 101, aux gammes de fréquences mesurables par le capteur 500. En référence à la figure 9, la corde 320 peut être avantageusement constituée d'une âme 321 sur laquelle un fil ou câble 322 est enroulé. Ceci permet de découpler les paramètres dimensionnant que sont l'élasticité de la corde 320 et la masse linéique $\mu_{OV}$ de la corde 320. En effet, dans ce cas, l'élasticité de la corde 320 est déterminée par la géométrie et la composition de l'âme, tandis que la masse linéique $\mu_{OV}$ de la corde 320 peut être ajustée par l'ajout du fil 322. Ces cordes 320 sont appelées « cordes filées ». L'intérêt d'utiliser des cordes filées est notamment de pouvoir augmenter la masse linéique $\mu_{OV}$ de la corde 320, sans pour autant augmenter son élasticité ou sa raideur (qui dépend de la section de l'âme), ce qui peut être intéressant pour faciliter l'excitation de la corde 320.

Le couple tension/diamètre est donc l'image du couple tension T sur masse linéique $\mu_{OV}$ qui implique une certaine vitesse de propagation des ondes le long de la corde 320. Deux paramètres sont notamment à prendre en compte lors du dimensionnement :

- La vitesse de propagation qui implique une certaine gamme de fréquences à mesurer, entre les états déchargé et chargé du SST 100 ; elle correspond de préférence à la gamme de mesure du capteur 500 ; et
- L'augmentation de l'une au moins parmi la masse linéique $\mu_{OV}$ et la tension T qui augmente l'inertie de la corde 320 et la rend moins sensible aux phénomènes dispersifs.

L'excitation de la corde 320 peut se faire de plusieurs manières, et plus particulièrement selon deux grands principes qui consistent en une excitation ponctuelle et une excitation entretenue.

Une excitation ponctuelle consiste à sortir ponctuellement la corde 320 de son état d'équilibre, par exemple sur une petite longueur et/ou un temps très court, afin d'initier en réaction la vibration de la corde 320. Par « ponctuellement », on entend « en certains cas limités » : essentiellement lorsque que l'on souhaite mesurer le taux de charge du SST 100. Plus particulièrement, la corde 320 peut être « pincée » (guitare, harpe) ce qui correspond à un petit déplacement initial suivi d'un relâchement, ou bien « frappée » (piano) ce qui correspond à une vitesse initiale imprimée à une partie de la corde 320.

Par exemple, pour « pincer » la corde 320, un plectre ou triangle de plastique souple (type médiator de guitare) peut être monté sur un axe tournant entraîné par un petit moteur. La pointe du plectre peut être configurée pour accrocher la corde 320 à chaque rotation.

Par exemple, pour « frapper » la corde, un petit marteau (type piano) monté sur un axe est entrainé par un ressort et tape la corde 320. Un petit moteur peut permettre de réarmer le système et un actionneur, par exemple un solénoïde, sert à induire la vibration.

Dans le cas d'une excitation entretenue, l'objectif peut être de trouver la fréquence de résonnance de la corde 320, cette fréquence correspondant à la fréquence propre d'oscillation de celle-ci. Le dispositif d'excitation 400 peut alors être configuré pour exciter la corde 320 en balayant une certaine gamme de fréquence et le capteur 500 de l'oscillation permet de déterminer l'amplitude maximale de vibration correspondant à la fréquence propre de vibration de la corde 320. L'excitation est donc entretenue au moins le temps nécessaire à la détermination de la fréquence de résonnance de la corde 320 ; autrement dit, l'excitation n'est pas nécessairement entretenue tout le temps, mais uniquement lorsque l'on souhaite mesurer le taux de charge du SST et au moins le temps nécessaire à cette mesure.

L'excitation entretenue peut être réalisée au moins de deux façons :

- Dans le cas d'une corde magnétique, l'action d'un champ magnétique oscillant induit par une bobine d'excitation, alimentée par un courant alternatif à fréquence contrôlable, permet l'excitation entretenue. Si la corde n'est pas magnétique, ou que l'on veut accroître l'action du champ magnétique, il est possible d'ajouter une pièce rapportée 310, tel qu'un aimant ou une masselotte magnétique, sur la corde 320 en vis-à-vis de la bobine d'excitation ; cette variante est illustrée par la figure 5b.
- Dans les autres cas, le même dispositif que celui décrit plus haut pour pincer la corde 320 - constitué d'un plectre monté sur un axe entraîné par un moteur et grattant la corde à chaque rotation - peut être mis en oeuvre de façon à exciter la corde 320 continûment et de façon contrôlée. Pour cela, il est souhaitable de réguler la vitesse de rotation du moteur, dont la fréquence de rotation correspond à la fréquence d'excitation de la corde 320. Au besoin, l'axe peut comporter plusieurs plectres, par exemple régulièrement répartis, permettant de pincer la corde plusieurs fois par tour et ainsi d'introduire un coefficient multiplicateur entre la fréquence de rotation du moteur et la fréquence d'excitation de la corde 320, égale au nombre de ces plectres.

Dans le cas d'une corde 320 en acier magnétique, la mesure des oscillations en un point peut se faire notamment via un capteur 500 magnétique (type microphone magnétique pour instrument à corde) constitués d'un aimant entouré d'une ou deux bobines de cuivre. L'oscillation de la corde 320 perturbe le champ magnétique perçu par la bobine, qui retranscrit donc le signal périodique mécanique sous forme électrique. Si la corde 320 n'est pas magnétique, ou que l'on veut accroitre l'impact de la vibration de la corde 320 sur ce capteur 500, il est possible d'ajouter une pièce rapportée 310, tel qu'un aimant ou une masselotte magnétique, sur la corde 320 en vis-à-vis du capteur 500 magnétique; cette variante est illustrée sur la figure 5b. En alternative ou en complément du capteur 500 magnétique, un vibromètre laser ou un capteur piézoélectrique peut être utilisé.

L'utilisation d'un capteur 500 acoustique, tel qu'un capteur piézoélectrique, placé par exemple dans le ciel 210 de gaz du réservoir 101, ce ciel 210 permettant la compensation des variations volumiques du MCP 200, est envisageable.

Un exemple particulièrement détaillé de mise en œuvre de l'invention est donné ci-dessous.

Dans cet exemple, on considère un SST 100 par MCP 200 à tubes et calandre de 1 m de haut, permettant de stocker de la chaleur par changement de phase solide/liquide du xylitol, préférentiellement associé à un dispositif ou à un additif limitant les problèmes de surfusion. Le xylitol en tant que MCP 200 est caractérisé par les paramètres suivants :

- Température de fusion : 93°C,
- Enthalpie massique de fusion: 240 kJ/kg,
- Densité solide : 1400 kg/m$^3$,
- Densité liquide : 1200 kg/m$^3$, et
- Viscosité dynamique à 93°C : 0,2 Pa.s.

A titre de comparaison, le nitrate de magnésium hexahydraté en tant que MCP 200 est caractérisé par les paramètres suivants :

- Température de fusion : 89°C,
- Densité solide : 1636 kg/m$^3$, et
- Densité liquide : 1550 kg/m$^3$,

correspondant à un taux d'expansion volumique de 6% entre phases liquide et solide, ce qui est peu par rapport à la plupart des MCP qui ont des taux d'expansion volumique généralement compris entre 10 et 20%.

Selon l'exemple, une corde ou câble 320 en acier de 2 mm de diamètre est installé dans la calandre 101, au milieu d'un faisceau de tubes 104 (entre trois tubes dans le cas d'un arrangement des tubes 104 en quinconce). La masse linéique $\mu_{OV}$ de la corde est de 25 g/m et sa tension est de 1000 N.

Le système d'excitation retenu est celui de la corde frappée ponctuellement par un petit marteau. L'allure de l'oscillation mesurée, lorsque la longueur de vibration est de 50 cm, montre une fréquence d'oscillation principale égale à environ 200 Hz. Ceci correspond bien à la fréquence propre de vibration fondamentale, calculée d'après la formule :

$$f_1 = \frac{\sqrt{T/\mu_{OV}}}{2L_{vib}}.$$

On se place dans le cas où les phases liquide 201 et solide 202 du MCP 200 sont principalement stratifiées verticalement. On peut donc appliquer la relation ci-dessus donnant le taux de charge $\tau$ en fonction de la fréquence de résonance $f_1$ pour tracer l'évolution de la fréquence propre d'oscillation en fonction du taux de charge $\tau$ du SST 100. On considère une section du réservoir 101 destiné à contenir le MCP de 2 m$^2$, une masse totale de matériau de 2160 kg correspondant à une hauteur de ciel 210 de gaz au-dessus du MCP 200 de 10 cm quand le SST 100 est complétement chargé et de 28 cm lorsqu'il est complétement déchargé. L'énergie latente stockée est de 144 kWh, soit les besoins thermiques d'un logement pendant trois jours en saison de chauffe. La figure 8 présente l'évolution de la fréquence fondamentale mesurée en fonction du taux de charge $\tau$ du stockage. On retrouve bien :

- Une fréquence de 100 Hz, correspondant à une longueur de vibration de 1 m, quand le SST 100 est complétement chargé, et
- Une fréquence de 357 Hz, correspondant à une longueur de vibration de 28 cm, quand le SST 100 est complètement déchargé.

Les intérêts de l'invention sont notamment sa simplicité de mise en œuvre et la possibilité d'intégration à une large variété de SST, du moment que la charge/décharge est faite de manière à stratifier, au moins en partie, les phases liquide 201 et solide 202 du MCP 200. La plupart du temps, la phase liquide 201 se trouvera sur le haut du réservoir 101, tandis que dans le cas d'un stockage de froid dans de la glace, c'est l'eau liquide 201 (plus dense) qui se trouve en bas du réservoir 101 (ce sera l'inverse pour du stockage de glace). En outre, les mesures de fréquences sont bien maîtrisées et très précises, ce qui permet une grande précision de la mesure du taux de charge $\tau$ du SST 100. De plus, l'invention est aussi applicable à tous les MCP 200 qui ne changent pas, ou peu, de masse volumique en changeant d'état. Ceci est un avantage considérable, étant donné que l'état de l'art est constitué en grande partie par des dispositifs de mesure reposant sur ce phénomène physique. Enfin, le prix faible du SST 100 selon l'invention intégrant le dispositif de mesure décrit ci-dessus le rend d'autant plus attractif.

REFERENCES

| 100 | Système de stockage thermique (SST) |
| 101 | Réservoir/Calandre |
| 102 | Première plaque collectrice |
| 103 | Seconde plaque collectrice |
| 104 | Tube |
| 105 | Ailette |
| 106 | Partie tubulaire |
| 107 | Dispositif de régulation |

| 200 | Matériau à changement de phase (MCP) |
| 201 | Phase liquide |
| 202 | Phase solide |
| 203 | Front de séparation |
| 210 | Ciel |

| 300 | Organe vibratoire |
| 301 | Partie libre en vibration |
| 302 | Partie statique |
| 303 | Première extrémité |
| 304 | Seconde extrémité |
| 305 | Tendeur |
| 306 | Butée |
| 310 | Pièce rapportée |
| 320 | Corde |
| 321 | Âme |
| 322 | Fil |

| 400 | Dispositif d'excitation |
| 500 | Capteur |
| 600 | Calculateur |

**Revendications**

**1.** Système de stockage thermique (SST) (100) par matériau à changement de phase (MCP) (200) comprenant :

- Un réservoir (101) destiné à contenir un MCP (200) par fusion/solidification et configuré pour qu'une partie d'un front de séparation (203) entre une phase liquide (201) et une phase solide (202) du MCP (200) ait, dans le réservoir (101), une position $H_{MCP,sol}$ représentative d'un taux de charge $\tau$ du SST (100), et
- Un dispositif de mesure d'un paramètre représentatif du taux de charge $\tau$ du SST agencé au moins en partie dans le réservoir (101),

le dispositif de mesure comprend :

- un organe vibratoire (300),
- un dispositif d'excitation (400) configuré pour induire une excitation, et
- un capteur (500) configuré pour mesurer un paramètre de vibration,
**caractérisé en ce que**
- l'organe vibratoire (300) est configuré pour être destiné à traverser la partie du front de séparation (203) de sorte à présenter:

○ une partie libre en vibration (301) au moins partiellement immergée dans la phase liquide (201) et
○ une partie statique (302) du fait de son ancrage dans la phase solide (202), la partie libre en vibration (301) présentant ainsi une longueur dite de vibration $L_{vib}$ représentative de la position $H_{MCP,sol}$ de la partie du front de séparation (203) dans le réservoir (101),

- le dispositif d'excitation (400) est configuré pour induire une excitation de la partie libre en vibration (301), et
- le capteur (500) est configuré pour mesurer un paramètre de vibration de la partie libre en vibration (301), l'excitation induite étant telle que le paramètre de vibration mesuré dépend de la longueur de vibration $L_{vib}$ de la partie libre en vibration (301), de sorte que la mesure du paramètre de vibration soit représentative du taux de charge $\tau$ du SST (100).

**2.** SST (100) selon la revendication précédente, dans lequel le dispositif de mesure comprend en outre un calculateur (600) configuré pour recevoir la mesure du paramètre de vibration mesuré par le capteur (500), par exemple sous la forme d'un signal de mesure, le calculateur (600) étant configuré pour en déduire au moins une valeur de fréquence propre $f_n$ de vibration de la partie libre en vibration (301) de l'organe vibratoire (300), puis pour calculer le taux de charge $\tau$ du SST (100) au moins en fonction de ladite au moins une valeur de fréquence propre $f_n$.

**3.** SST (100) selon l'une quelconque des revendications précédentes, dans lequel l'organe vibratoire (300) s'étend selon une direction principale et dans lequel le dispositif d'excitation (400) est configuré pour induire une excitation de la partie libre en vibration (301) de l'organe vibratoire (300) selon une direction transversale à la direction principale.

**4.** SST (100) selon l'une quelconque des revendications précédentes, dans lequel l'organe vibratoire (300) comprend une première extrémité (303) fixée au réservoir (101), de préférence fixée à une première plaque collectrice (102) du réservoir (101), et s'étend depuis la première extrémité (303) jusqu'à être destiné à traverser la partie du front de séparation (203), l'organe vibratoire (300) comprenant le cas échéant une seconde extrémité (304) fixée au réservoir (101), de préférence fixée à une seconde plaque collectrice (103) du réservoir, à l'opposé de la première extrémité (303) relativement à la partie du front de séparation (203).

**5.** SST (100) selon l'une quelconque des revendications précédentes, dans lequel l'organe vibratoire (300) est configuré pour être contraint à une tension T déterminée de part et d'autre de la partie du front de séparation (203) qu'il est destiné à traverser, la tension T étant de préférence comprise entre 100 et 5000 N, et dans lequel l'organe vibratoire (300) présente une masse linéique $\mu_{OV}$ déterminée, de sorte qu'au moins un mode propre de vibration de sa partie libre en vibration (301) soit déterminé en fonction de la tension T, de la masse linéique $\mu_{OV}$ et de la longueur de vibration $L_{vib}$.

**6.** SST (100) selon la revendication précédente dont un paramètre adimensionnel $A = \frac{12\mu_{liq}L_{vib}}{\sqrt{\mu_{OV}T}}$ est strictement inférieur à 1, de préférence inférieur à 0,1 où $\mu_{liq}$ est la viscosité dynamique de la phase liquide (201) du MCP (200) destiné à être contenu dans le réservoir (101).

**7.** SST (100) selon l'une quelconque des revendications précédentes, dans lequel le dispositif d'excitation (400) est configuré pour induire l'une parmi une excitation ponctuelle et une excitation entretenue de la partie libre en vibration (301) de l'organe vibratoire (300).

**8.** SST (100) selon l'une quelconque des revendications précédentes, dans lequel la partie libre en vibration (301) de l'organe vibratoire (300) comprend au moins une partie constituée en un matériau magnétique et consistant le cas échéant en une pièce rapportée (310), et dans lequel le dispositif d'excitation (400) est configuré pour induire magnétiquement l'excitation de la partie libre en vibration (301) de l'organe vibratoire (300), cette excitation magnétique étant le cas échant induite ou renforcée par excitation magnétique de la pièce rapportée (310).

**9.** SST (100) selon l'une quelconque des revendications précédentes, dans lequel le capteur (500) comprend au moins l'un parmi :

- un capteur de champ électromagnétique, tel qu'un microphone magnétique,
- un capteur acoustique, tel qu'un microphone acoustique, et
- un capteur optique, tel qu'une caméra.

**10.** SST (100) selon l'une quelconque des revendications précédentes, dans lequel le paramètre de vibration de la partie libre en vibration (301) de l'organe vibratoire (302) consiste en au moins l'un parmi :

- une amplitude de vibration, par exemple une amplitude maximale de vibration,
- une fréquence de vibration, par exemple une fréquence propre de vibration, et
- lorsque la partie libre en vibration (301) de l'organe vibratoire (300) comprend au moins une partie constituée en un matériau magnétique, une variation de champ électromagnétique générée par la vibration de la partie constituée en un matériau magnétique.

**11.** SST (100) selon l'une quelconque des revendications précédentes, dans lequel l'organe vibratoire (300) comprend une corde (320) ayant de préférence une section transversale présentant un diamètre compris entre 0,1 mm et 10 mm, de préférence compris entre 0,5 mm et 5 mm.

**12.** SST (100) selon l'une quelconque des revendications précédentes, du type à tubes (104) et calandre (101), comprenant une pluralité de tubes (104), l'organe vibratoire (300) étant de préférence disposé de façon sensiblement équidistante d'un ensemble de tubes (104) pris parmi la pluralité de tubes (104) et adjacents entre eux.

**13.** SST (100) selon l'une quelconque des revendications précédentes, dans lequel un volume de gaz appelé ciel (210) est ménagé dans le réservoir (101), le SST (100) comprenant le cas échéant un dispositif de régulation (700) de la nature et de la pression de ce gaz dans le ciel (210).

**14.** SST (100) selon l'une quelconque des revendications précédentes, dans lequel le MCP (200) destiné à être contenu dans le réservoir (101) présente une variation volumique lors du changement de phase inférieure à 20 %, de préférence inférieure à 10 %.

**15.** SST (100) selon l'une quelconque des revendications précédentes, dans lequel le MCP (200) destiné à être contenu dans le réservoir (101) comprend au moins l'un parmi : de l'eau, un sel, tel que le nitrate de lithium, un hydrate de sel, tel que l'acétate de sodium trihydraté, un acide gras, tel que l'acide stéarique, et un alcool de sucre, tel que le xylitol, et leur mélange, avec ou sans additif tensio-actif.


**Patentansprüche**

**1.** Thermisches Speichersystem (SST) (100) durch ein Phasenänderungsmittel (PCM) (200), umfassend:

- einen Tank (101), dazu bestimmt, ein PCM (200) durch Fusion/ Verfestigung zu enthalten und konfiguriert, damit ein Teil einer Trennfront (203) zwischen einer flüssigen Phase (201) und einer festen Phase (202) des PCM (200) in dem Tank (101) eine Position $H_{PCM, Boden}$ aufweist, die repräsentativ für ein Lastverhältnis $\tau$ des SST (100) ist, und
- eine Messvorrichtung eines Parameters, der repräsentativ für das Lastverhältnis $\tau$ des SST ist, die mindestens teilweise in dem Tank (101) angeordnet ist,

wobei die Messvorrichtung umfasst:

- ein Schwingungsorgan (300),
- eine Anregungsvorrichtung (400), die konfiguriert ist, um eine Anregung zu induzieren, und
- einen Sensor (500), der konfiguriert ist, um einen Schwingungsparameter zu messen,
- **dadurch gekennzeichnet, dass**
- das Schwingungsorgan (300) konfiguriert ist, um dazu bestimmt zu sein, den Teil der Trennfront (203) zu durchqueren, um Folgendes aufzuweisen:

   ∘ einen frei schwingbaren Teil (301), der mindestens teilweise in die flüssige Phase (201) eingetaucht ist, und
   ∘ einen durch seine Verankerung in der festen Phase (202) statischen Teil (302),
   wobei der frei schwingbare Teil (301) somit eine sogenannte Schwingungslänge $L_{vib}$ aufweist, die repräsentativ für die Position $H_{PCM, Boden}$ des Teils der Trennfront (203) in dem Tank (101) ist,

- die Anregungsvorrichtung (400) konfiguriert ist, um eine Anregung des frei schwingbaren Teils (301) zu induzieren, und
- der Sensor (500) konfiguriert ist, um einen Schwingungsparameter des frei schwingbaren Teils (301) zu messen,
- wobei die induzierte Anregung derart ist, dass der gemessene Schwingungsparameter von der Schwingungslänge $L_{vib}$ des frei schwingbaren Teils (301) abhängig ist,

sodass die Messung des Schwingungsparameters repräsentativ für das Lastverhältnis $\tau$ des SST (100) ist.

**2.** SST (100) nach dem vorstehenden Anspruch, wobei die Messvorrichtung weiter einen Rechner (600) umfasst, der konfiguriert ist, um die Messung des durch den Sensor (500) gemessenen Schwingungsparameters, beispielsweise in der Form eines Messsignals zu empfangen, wobei der Rechner (600) konfiguriert ist, um mindestens einen Eigenschwingungsfrequenzwert $f_n$ aus dem frei schwingbaren Teil (301) des Schwingungsorgans (300) abzuleiten, um danach das Lastverhältnis $\tau$ des SST (100) mindestens in Abhängigkeit von dem mindestens einen Eigenschwingungsfrequenzwert $f_n$ zu berechnen.

3. SST (100) nach einem der vorstehenden Ansprüche, wobei sich das Schwingungsorgan (300) entlang einer Hauptrichtung erstreckt, und wobei die Anregungsvorrichtung (400) konfiguriert ist, um eine Schwingung des frei schwingbaren Teils (301) des Schwingungsorgans (300) in einer Querrichtung zur Hauptrichtung zu induzieren.

4. SST (100) nach einem der vorstehenden Ansprüche, wobei das Schwingungsorgan (300) ein erstes Ende (303) umfasst, das an dem Tank (101) fixiert ist, vorzugsweise an einer ersten Sammelplatte (102) des Tanks (101) fixiert ist, und sich aus dem ersten Ende (303) erstreckt, bis es dazu bestimmt ist, den Teil der Trennfront (203) zu durchqueren, wobei das Schwingungsorgan (300) gegebenenfalls ein zweites Ende (304) umfasst, das an dem Tank (101) fixiert ist, vorzugsweise an einer zweiten Sammelplatte (103) des Tanks, entgegengesetzt zum ersten Ende (303) in Bezug auf den Teil der Trennfront (203) fixiert ist.

5. SST (100) nach einem der vorstehenden Ansprüche, wobei das Schwingungsorgan (300) konfiguriert ist, um auf eine bestimmte Spannung T beiderseits des Teils der Trennfront (203) beschränkt zu sein, zu dessen Querung es bestimmt ist, wobei die Spannung T vorzugsweise zwischen 100 und 5000 N enthalten ist, und wobei das Schwingungsorgan (300) eine bestimmte lineare Dichte $\mu_{OV}$ aufweist, sodass mindestens ein Eigenschwingungsmodus seines frei schwingbaren Teils (301) in Abhängigkeit von der Spannung T, der lineare Dichte $\mu_{OV}$ und der Schwingungslänge $L_{vib}$ bestimmt wird.

6. SST (100) nach dem vorstehenden Anspruch, von der ein adimensionaler Parameter $A = \frac{12\mu_{liq}L_{vib}}{\sqrt{\mu_{OV}T}}$ streng kleiner als 1, vorzugsweise kleiner als 0,1 ist, wobei ($\mu_{liq}$ die dynamische Viskosität der flüssigen Phase (201) des PCM (200) ist, das dazu bestimmt ist, in dem Tank (101) enthalten zu sein.

7. SST (100) nach einem der vorstehenden Ansprüche, wobei die Anregungsvorrichtung (400) konfiguriert ist, um eine von einer punktuellen Anregung und einer ausgehaltenen Anregung des frei schwingbaren Teils (301) des Schwingungsorgans (300) zu induzieren.

8. SST (100) nach einem der vorstehenden Ansprüche, wobei der frei schwingbare Teil (301) des Schwingungsorgans (300) mindestens einen Teil umfasst, der aus einem magnetischen Material gebildet ist, und gegebenenfalls aus einem beigebrachten Teil (310) besteht, und wobei die Anregungsvorrichtung (400) konfiguriert ist, um magnetisch die Anregung des frei schwingbaren Teils (301) des Schwingungsorgans (300) zu induzieren, wobei diese magnetische Anregung gegebenenfalls durch magnetische Anregung des beigebrachten Teils (310) induziert oder verstärkt wird.

9. SST (100) nach einem der vorstehenden Ansprüche, wobei der Sensor (500) mindestens eines umfasst aus:

- einen Elektromagnetfeldsensor, wie ein magnetisches Mikrofon,
- einen akustischen Sensor, wie ein akustisches Mikrofon, und
- einen optischen Sensor, wie eine Kamera.

10. SST (100) nach einem der vorstehenden Ansprüche, wobei der Schwingungsparameter des frei schwingbaren Teils (301) des Schwingungsorgans (302) aus mindestens einem besteht, aus:

- einer Schwingungsamplitude, beispielsweise einer maximalen Schwingungsamplitude,
- einer Schwingungsfrequenz, beispielsweise einer Eigenschwingungsfrequenz, und
- wenn der frei schwingbare Teil (301) des Schwingungsorgans (300) mindestens einen Teil umfasst, der aus einem magnetischen Material gebildet wird, eine Elektromagnetfeldvariation, die durch die Schwingung des Teils generiert wird, der aus einem magnetischen Material gebildet ist.

11. SST (100) nach einem der vorstehenden Ansprüche, wobei das Schwingungsorgan (300) ein Seil (320) umfasst, das vorzugsweise einen Querschnitt aufweist, einen Durchmesser aufweisend, der zwischen 0,1 mm und 10 mm enthalten ist, vorzugsweise zwischen 0,5 mm und 5 mm enthalten ist.

**12.** SST (100) nach einem der vorstehenden Ansprüche, in der Art mit Rohren (104) und Kühlermaske (101), eine Vielzahl von Rohren (104) umfassend, wobei das Schwingungsorgan (300) vorzugsweise in im Wesentlichen abstandsgleicher Form zu einer Reihe von Rohren (104), die aus der Vielzahl von Rohren (104) angenommen ist, und einander benachbart angeordnet ist.

**13.** SST (100) nach einem der vorstehenden Ansprüche, wobei ein Kopfraum (210) genanntes Gasvolumen in dem Tank (101) eingerichtet ist, wobei das SST (100) gegebenenfalls eine Regelungsvorrichtung (700) der Art und des Drucks dieses Gases in dem Kopfraum (210) umfasst.

**14.** SST (100) nach einem der vorstehenden Ansprüche, wobei das PCM (200), das dazu bestimmt ist, in dem Tank (101) enthalten zu sein, eine Volumenänderung beim Phasenwechsel von weniger als 20%, vorzugsweise weniger als 10% aufweist.

**15.** SST (100) nach einem der vorstehenden Ansprüche, wobei das PCM (200), das dazu bestimmt ist, in dem Tank (101) enthalten zu sein, mindestens eines umfasst aus: Wasser, einem Salz, wie Lithiumnitrat, einem Salzhydrat, wie Natriumacetat-Trihydrat, einer Fettsäure, wie Stearinsäure, und einem Zuckeralkohol, wie Xylitol und deren Gemisch mit oder ohne oberflächenaktives Additiv.

**Claims**

**1.** System for thermal storage (STS) (100) by phase change material (PCM) (200) comprising:

- a tank (101) intended for containing a PCM (200) by fusion/solidification and configured so that a portion of a separation edge (203) between a liquid phase (201) and a solid phase (202) of the PCM (200) has, in the tank (101), a position $H_{PCM,sol}$ representative of a charge rate $\tau$ of the STS (100), and
- a device for measuring a parameter representative of the charge rate $\tau$ of the STS arranged at least partially in the tank (101),

the device for measuring comprises:

- a vibration member (300),
- an excitation device (400) configured to induce an excitation, and
- a sensor (500) configured to measure a vibration parameter,
**characterised in that**
- the vibration member (300) is configured to be intended for passing through the portion of the separation edge (203) in such a way as to have:

   ◦ a free vibration portion (301) at least partially immersed in the liquid phase (201) and
   ◦ a static portion (302) due to the anchoring thereof in the solid phase (202),
   the free vibration portion (301) thus having a so-called vibration length $L_{vib}$ representative of the position $H_{PCM,sol}$ of the portion of the separation edge (203) in the tank (101),

- the excitation device (400) is configured to induce an excitation of the free vibration portion (301), and
- the sensor (500) is configured to measure a vibration parameter of the free vibration portion (301),

the excitation induced being such that the vibration parameter measured depends on the vibration length $L_{vib}$ of the free vibration portion (301),
in such a way that the measurement of the vibration parameter is representative of the charge rate $\tau$ of the STS (100).

**2.** STS (100) according to the preceding claim, wherein the device for measuring further comprises a calculator (600) configured to receive the measurement of the vibration parameter measured by the sensor (500), for example in the form of a measurement signal, the calculator (600) being configured to deduce therefrom at least one specific frequency value $f_n$ of the vibration of the free vibration portion (301) of the vibration member (300), then to calculate the charge rate $\tau$ of the STS (100) at least according to said at least one specific frequency value $f_n$.

**3.** STS (100) according to any one of the preceding claims, wherein the vibration member (300) extends in a main direction and wherein the excitation device (400) is configured to induce an excitation of the free vibration portion (301) of the vibration member (300) in a direction transversal to the main direction.

4.  STS (100) according to any one of the preceding claims, wherein the vibration member (300) comprises a first end (303) fastened to the tank (101), preferably fastened to a first collector plate (102) of the tank (101), and extends from the first end (303) until being intended for passing through the portion of the separation edge (203), the vibration member (300) comprising where applicable a second end (304) fastened to the tank (101), preferably fastened to a second collector plate (103) of the tank, opposite the first end (303) relative to the portion of the separation edge (203).

5.  STS (100) according to any one of the preceding claims, wherein the vibration member (300) is configured to be stressed at a tension T determined on either side of the separation edge (203) that it is intended for passing through, the tension T being preferably comprised between 100 and 5000 N, and wherein the vibration member (300) has a determined linear density $\mu_{OV}$, in such a way that at least one specific vibration mode of its free vibration portion (301) is determined according to the tension T, of the linear density $\mu_{OV}$ and of the vibration length $L_{vib}$.

6.  STS (100) according to the preceding claim of which a dimensionless parameter $A = \frac{12\mu_{liq}L_{vib}}{\sqrt{\mu_{OV}T}}$ is strictly less than 1, preferably less than 0.1 where $\mu_{liq}$ is the dynamic viscosity of the liquid phase (201) of the PCM (200) intended for being contained in the tank (101).

7.  STS (100) according to any one of the preceding claims, wherein the excitation device (400) is configured to induce one from a punctiform excitation and a maintained excitation of the free vibration portion (301) of the vibration member (300).

8.  STS (100) according to any one of the preceding claims, wherein the free vibration portion (301) of the vibration member (300) comprises at least one portion formed from a magnetic material and consisting where applicable of an added part (310), and wherein the excitation device (400) is configured to magnetically induce the excitation of the free vibration portion (301) of the vibration member (300), this magnetic excitation being where applicable induced or reinforced by magnetic excitation of the added part (310).

9.  STS (100) according to any one of the preceding claims, wherein the sensor (500) comprises at least one from:

    - an electromagnetic field sensor, such as a magnetic microphone,
    - an acoustic sensor, such as an acoustic microphone, and
    - an optical sensor, such as a camera.

10. STS (100) according to any one of the preceding claims, wherein the vibration parameter of the free vibration portion (301) of the vibration member (302) consists of at least one from:

    - a vibration amplitude, for example a maximum vibration amplitude,
    - a vibration frequency, for example a specific vibration frequency, and
    - when the free vibration portion (301) of the vibration member (300) comprises at least a portion formed from a magnetic material, an electromagnetic field variation generated by the vibration of the portion formed from a magnetic material.

11. STS (100) according to any one of the preceding claims, wherein the vibration member (300) comprises a cord (320) having preferably a transversal section having a diameter comprised between 0.1 mm and 10 mm, preferably comprised between 0.5 mm and 5 mm.

12. STS (100) according to any one of the preceding claims, of the type with tubes (104) and shell (101), comprising a plurality of tubes (104), the vibration member (300) being preferably disposed in a manner substantially equidistant from an assembly of tubes (104) taken from the plurality of tubes (104) and adjacent to each other.

13. STS (100) according to any one of the preceding claims, wherein a volume of gas called blanket gas (210) is provided in the tank (101), the STS (100) comprising where applicable a device for regulating (700) the nature and the pressure of this blanket gas (210).

14. STS (100) according to any one of the preceding claims, wherein the PCM (200) intended for being contained in the tank (101) has a volume variation during the change of phase less than 20%, preferably less than 10%.

15. STS (100) according to any one of the preceding claims, wherein the PCM (200) intended for being contained in the tank (101) comprises at least one from: water, a salt, such as lithium nitrate, a salt hydrate, such as sodium acetate trihydrate, a fatty acid, such as stearic acid, and a sugar alcohol, such as xylitol, and the mixture thereof, with or without surfactant additive.

**FIG. 1**

**FIG. 2**

**FIG. 3**

**FIG. 4**

23

**FIG. 5a**

Détail A

**FIG. 5b**

**FIG. 6**

300,320

305

306

**FIG. 7**

Fréquence fondamentale (Hz)

400
350
300
250
200
150
100
50
0

0    20    40    60    80    100

Taux de charge (%)

**FIG. 8**

321

320

322

**FIG. 9**

**EP 3 264 018 B1**

## RÉFÉRENCES CITÉES DANS LA DESCRIPTION

**Documents brevets cités dans la description**

- WO 2012156343 A1
- WO 2016051377 A1
- DE 10235581 C1